# FASCICULE DE BREVET EUROPEEN

(11) **EP 0 511 069 B1**
(45) Date de publication et mention de la délivrance du brevet: **03.05.1995**
(21) Numéro de dépôt: 92401102.6
(22) Date de dépôt: 17.04.1992
(51) Int. Cl.: H01S 3/06, G02B 6/12

(54) **Amplificateur optique dans le domaine spectral 1,26 à 1,34 micron**
Optischer Verstärker im Spektralbereich von 1.26 bis 1.34 micron
Optical amplifier in the spectral range from 1.26 to 1.34 micron

(30) Priorité: 22.04.1991 FR 9104929
(43) Date de publication de la demande: 28.10.1992
(73) Titulaire: ALCATEL N.V., NL-1077 XX Amsterdam (NL)
(72) Inventeur: Fevrier, Hervé, F-91300 Massy (FR); Marcerou, Jean-François, F-91080 Courcouronnes (FR); Le Sergent, Christian, F-91460 Marcoussis (FR)
(74) Mandataire: Laroche, Danièle

(56) Documents cités:
- US-A- 4 993 034
- ELECTRONICS LETTERS. vol. 27, no. 8, 11 Avril 1991, Stevenage,GB;pages 628 -629; S.F. CARTER et al.: "Amplification at 1.3 mum in a Pr3+ doped single-modefluorozirconate fibre"
- ELECTRONICS LETTERS. vol. 27, no. 2, 17 Janvier 1991, Stevenage,GB;pages 189 -191; J.Y. ALLAIN et al.: "Tunable cw lasing around 610, 635, 695, 715, 885 and 910 nm in praseodymium-doped fluorozirconate fibre"
- SPIE. GLASSES FOR OPTOELECTRONICS vol. 1128, 1989, London, GB;pages 142 - 144;S. IRAJ NAJAFI et al.: "Ion-exchanged rare-earth doped waveguides"

## Description

La présente invention concerne un amplificateur optique dans le domaine spectral 1,26 à 1,34 »m, trouvant notamment une application dans les systèmes de télécommunications analogiques à fibre optique.

On connaît par l'article - "Pr ³⁺ doped fluoride fiber amplifier operating at 1.31 »m", de Y. OHISHI, T. KANAMORI, T. KITAGAWA, S. TAKAHASHI, E. SNITZER and G.H. SIGEL, Proceedings OFC' 91 paper PD2, San Diego 1991- un amplificateur optique à fibre optique en verre fluoré dopé au praséodyme. Le confinement d'une puissance optique dans une telle fibre monomode permet d'obtenir une inversion de population donnant lieu à une émission stimulée dans le domaine spectral 1,26 »m à 1,34 »m.

Si on appelle gain net le rapport exprimé en dB du signal à la sortie du milieu amplificateur sur le signal à l'entrée de celui-ci, le gain net de l'amplificateur à fibre précité est de 5,1 dB à 1,31 »m pour une puissance de pompe de 180 mW à 1,017 »m.

Cependant, il apparaît que les fibres fluorées connues actuellement possèdent des propriétés mécaniques relativement mauvaises. D'une part elles présentent une section faible avec un rayon de l'ordre de 60 »m et d'autre part elles sont très sensibles à la pollution par l'environnaient extérieur, ce qui les fragilise encore.

La présente invention a pour but de réaliser un amplificateur optique dans le domaine spectral 1,26 à 1,34 »m, dont les propriétés mécaniques soient meilleures que celles des amplificateurs à fibre optique dopée actuellement connus.

La présente invention a pour objet un amplificateur optique dans le domaine spectral 1,26 à 1,34 »m, comportant un substrat massif en verre fluoré dopé au praséodyme avec une concentration comprise entre 0,1% et 2% en poids, dans lequel est réalisé un guide d'onde monomode en trois dimensions présentant un écart d'indice Δ n vis-à-vis de celui dudit verre fluoré compris entre 4 x 10⁻³ et 8 x 10⁻², ledit guide d'onde étant associé par des moyens de couplage à une pompe optique de longueur d'onde égale à 1,02 »m ± 0,1 »m.

Selon un mode de réalisation ledit guide d'onde est obtenu par diffusion localisée de plomb dans ledit verre fluoré.

Le plomb peut être remplacé par tout matériau compatible avec le verre fluoré et permettant d'obtenir l'écart d'indice précité.

Le guide est avantageusement recouvert d'une couche en verre fluoré, de même nature que ledit substrat, mais non dopé au praséodyme ; cette couche d'épaisseur au moins égale à 100 »m est destinée à limiter les pertes du guide.

Que ledit guide soit recouvert ou non de ladite couche, on prévoit un revêtement supplémentaire en résine époxy ne polluant pas le verre fluoré, telle que par exemple une résine polyuréthane réticulable par un rayonnement ultra-violet.

Le verre fluoré peut être du ZBLAN ou du BIZYT.

Le ZBLAN est un verre de composition ZrF₄ - BaF₂ - LaF₃ - AlF₃ - NaF et le BIZYT est un verre de composition BaF₂ - InF₃ - ZnF₂ - YF₃ - ThF₄.

Le verre fluoré peut être dopé à l'ytterbium avec une concentration comprise entre 0,1 % et 10% en poids.

Selon un mode de réalisation avantageux ledit guide d'onde présente une longueur comprise entre 20 mm et 200 mm, une largeur comprise entre 0,8 »m et 6 »m et une épaisseur comprise entre 0,8 »m et 6 »m.

D'autres caractéristiques et avantages de la présente invention apparaîtront au cours de la description suivante de modes de réalisation donnés à titre illustratif mais nullement limitatif. Dans le dessin annexé :
- la figure 1 est une vue très schématique d'un amplificateur selon l'invention,
- la figure 2 montre très schématiquement le guide d'onde appartenant à l'amplificateur selon l'invention,
- la figure 3 montre les variations du gain net G (en dB) de l'amplificateur de la figure 1 en fonction de la longueur d'onde λ (»m) du signal d'entrée.

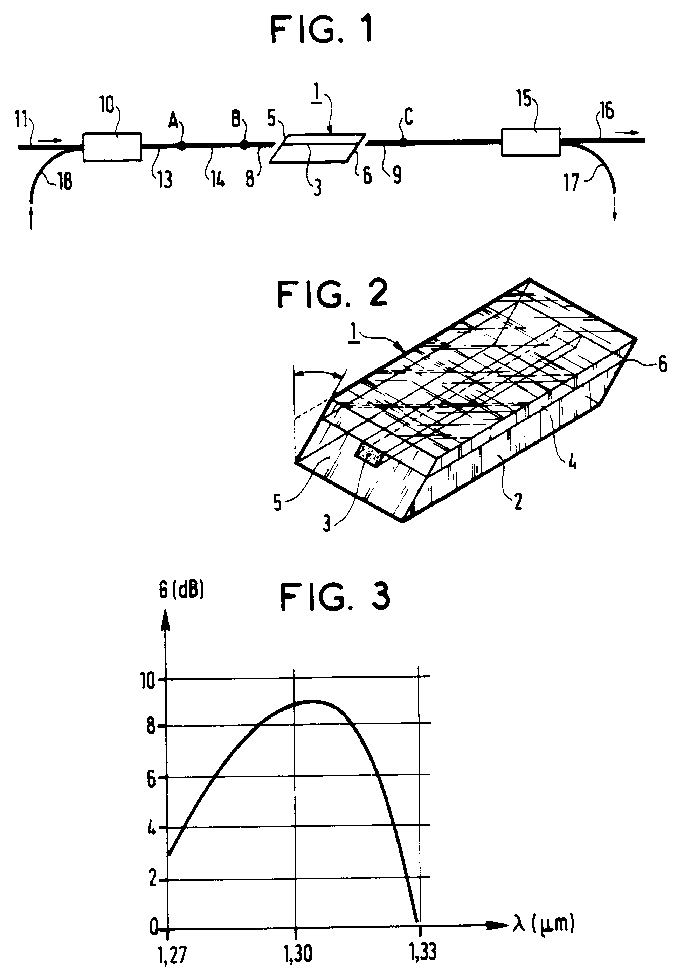

On voit dans les figures 1 et 2 la pièce principale 1 de l'amplificateur selon l'invention. Elle comprend un substrat 2 en verre fluoré ZBLAN, dopé au praséodyme à raison de 0,5% en poids. Dans ce substrat a été réalisé un guide d'onde monomode 3 par diffusion de plomb, selon un procédé connu en lui-même. La différence d'indice entre le verre du guide d'onde et le verre du substrat est de 2 x 10⁻². La longueur du guide 3 est de 150 mm ; sa largeur est de 4 »m ainsi que sa hauteur. Le diamètre de mode est de 4,5 »m pour une longueur d'onde de 1,3 »m.

La face supérieure du guide est recouverte par exemple par un procédé CVD d'une couche 4 de 100 »m en même verre fluoré que celui du substrat 2, mais non dopé au praséodyme. La face d'entrée 5 et la face de sortie 6 de la pièce 1 sont polies et légèrement inclinées par rapport à l'axe du guide 3, par exemple d'un angle de 14°. La qualité du poli doit être de λ /10 au moins. Ces dispositions permettent de s'affranchir de toute réflexion pouvant donner lieu à un effet laser.

Un multiplexeur à fibre optique 10 reçoit par sa fibre d'entrée 11 des signaux à 1,3 »m, et est connecté par sa fibre d'entrée 12 à une pompe optique émettant à 1,008 ». Sa fibre de sortie 13 est reliée à la face d'entrée 5 du guide 3 par l'intermédiaire d'un tronçon de fibre 14 présentant une différence d'indice Δ n = 25 x 10⁻³ et suivi d'un connecteur 8 incliné. La fibre 14 permet l'adaptation du mode sortant du multiplexeur à celui du guide 3 aux longueurs d'onde du signal et de la pompe. Cette fibre entraîne une perte de l'ordre de 0,2 dB (entre les points A et B). Le connecteur incliné 8 a la face de sa fibre de sortie inclinée d'un angle de 14° par rapport à son axe. Un connecteur 9 analogue au connecteur 8 est prévu au niveau de la face de sortie 6 du guide 2.

Le gain net de l'amplificateur selon l'invention est compté entre les points A et C.

A la sortie C est disposé un démultiplexeur 15 avec une fibre de sortie 17 pour l'énergie de pompe à 1,008 »m et une fibre de sortie 16 pour le signal amplifié à 1,3 »m.

La figure 3 montre pour une puissance de pompe de 1,3 watts le gain net pour un signal de puissance de 10 » watt dont la longueur d'onde varie entre 1,27 »m et 1,33 »m.

Le gain obtenu est suffisant pour les applications envisagées.

Selon une variante de réalisation on utilise un substrat 2 codopé à l'ytterbium avec un taux de 0,5% en poids ; la longueur du guide est de 130 mm.

On met en oeuvre une pompe délivrant 600 mW à 990 nm et l'on obtient un gain net de 12 dB pour un signal de longueur d'onde égale à 1,298 »m. Il est possible d'augmenter encore le gain net en optimisant le codopage praséodyme/ytterbium afin d'améliorer les possibilités de transfert de l'ytterbium vers le praséodyme.

Bien entendu l'invention n'est pas limitée aux modes de réalisation décrits. On pourra sans sortir du cadre de l'invention remplacer tout moyen par un moyen équivalent.

## Revendications

1. Amplificateur optique dans le domaine spectral 1,26 à 1,34 »m, comportant un substrat massif en verre fluoré dopé au praséodyme avec une concentration comprise entre 0,1% et 2% en poids, dans lequel est réalisé un guide d'onde monomode en trois dimensions présentant un écart d'indice Δn vis-à-vis de celui dudit verre fluoré compris entre 4.10⁻³ et 8.10⁻², ledit guide d'onde étant associé par des moyens de couplage à une pompe optique de longueur d'onde égale à 1,02 »m ± 0,1 »m.

2. Amplificateur optique selon la revendication 1, caractérisé par le fait que ledit guide d'onde est obtenu par diffusion localisée de plomb dans ledit verre fluoré.

3. Amplificateur optique selon l'une des revendications précédentes, caractérisé par le fait que ledit verre fluoré est en outre dopé à l'ytterbium avec une concentration comprise entre 0,1% et 10% en poids.

4. Amplificateur optique selon l'une des revendications précédentes, caractérisé par le fait que ledit guide d'onde présente une longueur comprise entre 20 mm et 200 mm.

5. Amplificateur optique selon l'une des revendications précédentes, caractérisé par le fait que ledit verre fluoré est choisi parmi le ZBLAN et le BIZYT.

6. Amplificateur optique selon l'une des revendications précédentes, caractérisé par le fait que ledit guide est recouvert d'une couche en verre fluoré, d'épaisseur au moins égale à 100 »m.

7. Amplificateur optique selon l'une des revendications précédentes, caractérisé par le fait qu'il est muni d'un revêtement de résine ne polluant pas le verre fluoré.

8. Amplificateur optique selon l'une des revendications précédentes, caractérisé par le fait que ledit guide d'onde présente une largeur comprises entre 0,8 »m et 6 »m et une épaisseur comprise entre 0,8 »m et 6 »m.

## Patentansprüche

1. Optischer Verstärker im Spektralbereich zwischen 1,26 und 1,34 »m, mit einem massiven Substrat aus fluoriertem Glas, das mit Praseodym in einer Konzentration zwischen 0,1 und 2 Gew.% dotiert ist und in dem ein dreidimensionaler Monomode-Lichtwellenleiter realisiert ist, der einen Brechungsindexabstand Δn gegenüber dem des fluorierten Glases zwischen 4·10⁻³ und 8·10⁻² besitzt, wobei der Lichtwellenleiter durch Koppelmittel mit einer optischen Pumpe einer Wellenlänge von 1,02 »m ± 0,1 mm verbunden ist.

2. Optischer Verstärker nach Anspruch 1, dadurch gekennzeichnet, daß der Lichtwellenleiter durch lokalisierte Diffusion von Blei in das fluorierte Glas erhalten wird.

3. Optischer Verstärker nach einem der vorhergehenden Ansprüche, dadurch gekennzeichnet, daß das fluorierte Glas außerdem mit Ytterbium in einer Konzentration zwischen 0,1 und 10 Gew.% dotiert ist.

4. Optischer Verstärker nach einem der vorhergehenden Ansprüche, dadurch gekennzeichnet, daß der Wellenleiter eine Länge zwischen 20 und 200 mm aufweist.

5. Optischer Verstärker nach einem der vorhergehenden Ansprüche, dadurch gekennzeichnet, daß das fluorierte Glas ausgewählt ist aus ZBLAN und BIZYT.

6. Optischer Verstärker nach einem der vorhergehenden Ansprüche, dadurch gekennzeichnet, daß der Wellenleiter mit einer Schicht aus fluoriertem Glas bedeckt ist, deren Dicke mindestens 100 beträgt.

7. Optischer Verstärker nach einem der vorhergehenden Ansprüche, dadurch gekennzeichnet, daß er eine Abdeckung aus einem Harz besitzt, das das fluorierte Glas nicht verschmutzt.

8. Optischer Verstärker nach einem der vorhergehenden Ansprüche, dadurch gekennzeichnet, daß der Wellenleiter eine Breite zwischen 0,8 und 6 »m und eine Dicke zwischen 0,8 und 6 »m besitzt.

## Claims

1. An optical amplifier in the 1.26 »m to 1.34 »m spectrum range, comprising a solid substrate of fluoride glass doped with praseodymium to a concentration lying in the range 0.1% to 2% by weight, in which a three-dimensional monomode waveguide is formed having an index difference Δn relative to the index of the fluoride glass lying in the range 4 × 10⁻³ and 8 × 10⁻², said waveguide being associated by coupling means with an optical pump having a wavelength equal to 1.02 »m ± 0.1 »m.

2. An optical amplifier according to claim 1, characterized by the fact that said waveguide is obtained by localized diffusion of lead into said fluoride glass.

3. An optical amplifier according to any preceding claim, characterized by the fact that said fluoride glass is also doped with ytterbium to a concentration lying in the range 0.1% to 10% by weight.

4. An optical amplifier according to any preceding claim, characterized by the fact that said waveguide has a length lying in the range 20 mm to 200 mm.

5. An optical amplifier according to any preceding claim, characterized by the fact that said fluoride glass is selected from ZBLAN and BIZYT.

6. An optical amplifier according to any preceding claim, characterized by the fact that said waveguide is covered with a layer of fluoride glass to a thickness of not less than 100 »m.

7. An optical amplifier according to any preceding claim, characterized by the fact that it is provided with a coating of resin that does not pollute fluoride glass.

8. An optical amplifier according to any preceding claim, characterized by the fact that said waveguide has a width lying in the range 0.8 »m to 6 »m, and a thickness lying in the range 0.8 »m to 6 »m.
